# EUROPÄISCHE PATENTSCHRIFT

(11) **EP 3 420 793 B1**
(45) Veröffentlichungstag und Bekanntmachung des Hinweises auf die Patenterteilung: **28.04.2021**
(21) Anmeldenummer: 18179430.6
(22) Anmeldetag: 24.06.2018
(51) Int. Cl.: A01D 34/82, B62B 5/06

(54) **VORRICHTUNG ZUR EINSTELLUNG DER POSITION EINES HOLMS EINES ORTSBEWEGLICHEN GERÄTS**
DEVICE FOR ADJUSTING THE POSITION OF A SPAR OF A MOVING DEVICE
DISPOSITIF DE RÉGLAGE DE LA POSITION D'UN LONGERON D'UN APPAREIL DÉPLACABLE

(30) Priorität: 27.06.2017 DE 102017006160
(43) Veröffentlichungstag der Anmeldung: 02.01.2019
(73) Patentinhaber: MTD Products Inc, Valley City OH 44280 (US)
(72) Erfinder: Kinzer, Andreas, 66424 Homburg (DE); Kubik, Ingo, 66606 St.Wendel (DE)
(74) Vertreter: Meissner Bolte Partnerschaft mbB

(56) Entgegenhaltungen:
- EP-A1- 2 777 377
- EP-A1- 3 141 101
- DE-U1-202013 005 119
- US-A- 2 756 064

## Beschreibung

Die Erfindung bezieht sich auf eine Vorrichtung zur Einstellung der Position eines Holms zum Bewegen und/oder Steuern eines ortsbeweglichen Gerätes, bei der der Holm zumindest eine Holmstange aufweist, deren erstes Ende drehbar an einem Ende des Gerätes befestigt ist und deren zweites Ende einen Handgriff trägt. Die Vorrichtung weist einen Holm-Verstellmechanismus auf, über den das erste Ende des Holms um eine erste Drehachse drehbar und auf mehrere Schwenkstellungen einstellbar an dem Gerät befestigt ist, und der Rasteinrichtungen zur Festlegung des Holm in zumindest einer Schwenkstellung aufweist.

Derartige Vorrichtungen werden an einer Vielzahl von Geräten, wie beispielsweise Rasenmähern, Vertikutierern, anderen Bodenbearbeitungsgeräten sowie anderen Geräten verwendet. Hierbei ist es zumeist erwünscht, dass der Holm auf unterschiedliche Höhen einstellbar ist, um eine Anpassung an die Größe des Benutzers und/oder dessen Vorlieben zu ermöglichen.

Ein Problem, das bei derartigen Vorrichtungen zur Einstellung der Position des Holms auftritt, besteht darin, dass die Verstellung des Holms auf unterschiedliche Höhen entweder durch Schraubverbindungen oder dergleichen erfolgt, so dass die Position des Holms nur schwierig mit Hilfe von Werkzeugen zu ändern ist, oder es werden Rasteinrichtungen verwendet, die jedoch zumeist nicht spielfrei sind, was im Gebrauch störend ist.

Aus der AU 441006 ist eine Vorrichtung der eingangs genannten Art bekannt, bei der die Holmstange durch einen plattenförmigen Ansatz verlängert ist, der eine gekröpfte Form aufweist, die sich seitlich von der Längsachse der Holmstange erstreckt und einen Rastbolzen trägt, der mit einer Rastausnehmung in einer Rastplatte in Eingriff bringbar ist, die um eine zur Drehachse des Holms parallele Achse verschwenkbar ist, wobei die Rasteinrichtungen relativ kompliziert aufgebaut sind und eine erhebliche Breite aufweisen, die nicht ohne weiteres durch eine Abdeckung abzudecken ist, sodass sich in den Rastmechanismus Gras und Schmutzreste verfangen können.

Abdeckungen für Vorrichtungen der eingangs genannten Art sind beispielsweise aus der EP 3141101 A1 bekannt. Darüber hinaus wird in DE 20 2013 005 119 U1 ein Arbeitswerkzeug mit einer verriegelbaren Einrichtung zur Einstellung der Position einer Stange, die zum Bewegen und/oder Lenken des Arbeitswerkzeugs geeignet ist, offenbart. Ferner wird in US 2 756 064 A ein einstellbarer Verriegelungsmechanismus zur Einstellung des Winkels einer Zugstange oder eines Griffs eines zusammenklappbaren Rahmens eines Golfwagens offenbart.

Der Erfindung liegt die Aufgabe zugrunde, eine Vorrichtung zur Einstellung der Position eines Holms zu schaffen, die sehr einfach und ohne Werkzeuge bedienbar ist und die dennoch weitgehend oder vollständig spielfrei ist.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Vorrichtung wird eine weitgehende, wenn nicht vollständige Beseitigung eines Spiels bei einfacher Handhabung des Holm-Verstellmechanismus erreicht.

Vorteilhafte Ausführungsformen der Vorrichtung werden nachfolgend an Hand der Zeichnungen noch näher erläutert.

In der Zeichnung zeigen:
- Figur 1: eine Außenansicht einer Ausführungsform des Holm-Verstellmechanismus der Vorrichtung in Anwendung auf den Heckbereich eines Rasenmähers;
- Figur 2: eine Teil-Außenansicht der Ausführungsform der Holmverstellung nach Figur 1;
- Figur 3: eine auseinandergezogene Teilansicht der Holmverstellung nach den Figuren 1 und 2;
- Figur 4: eine auseinander gezogene Ansicht der Teile der Holmverstellung;
- Figur 5: eine schematische Ansicht zur Erläuterung der Relativpositionen der Drehachsen der Holmstange, des Rasthebels und dessen Raststift im Rastzustand.

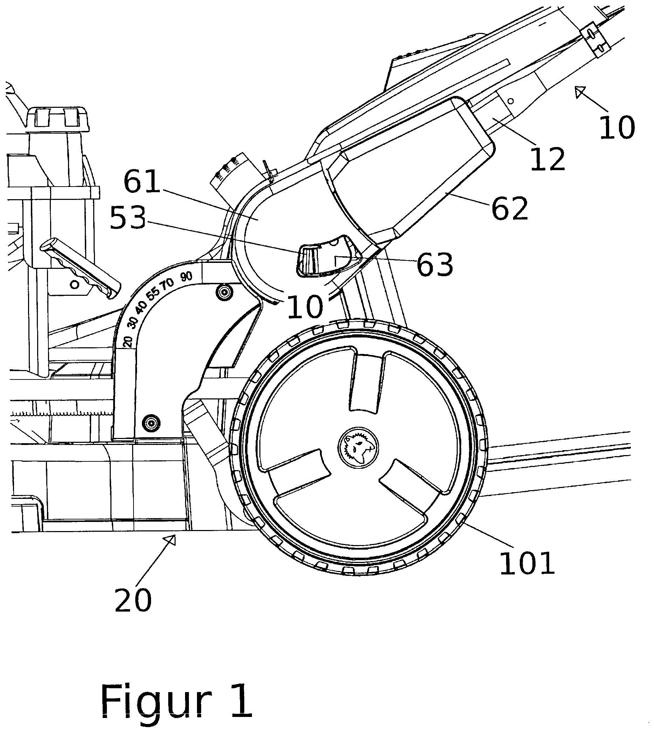

In Figur 1 ist ein Anwendungsbeispiel einer Ausführungsform des erfindungsgemäßen Holm-Verstellmechanismus zeigt, die dazu dienen soll, zu verdeutlichen, wo und an welcher Stelle diese Ausführungsform des Holm-Verstellmechanismus bei einem Rasenmäher oder ähnlichen Garten- und anderen Geräten 20 verwendbar ist. Obwohl in Figur 1 als Beispiel ein Hinterrad 101 gezeigt ist, kann das Gerät auch in anderer Weise unter der Führung mit Hilfe des Holm über den Boden bewegbar ausgebildet sein

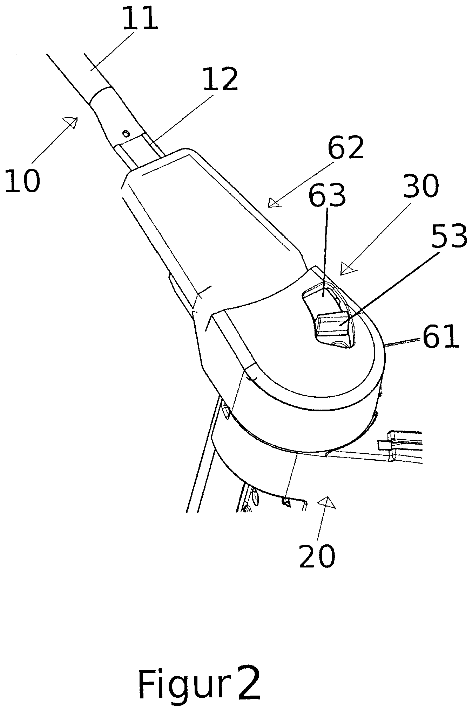

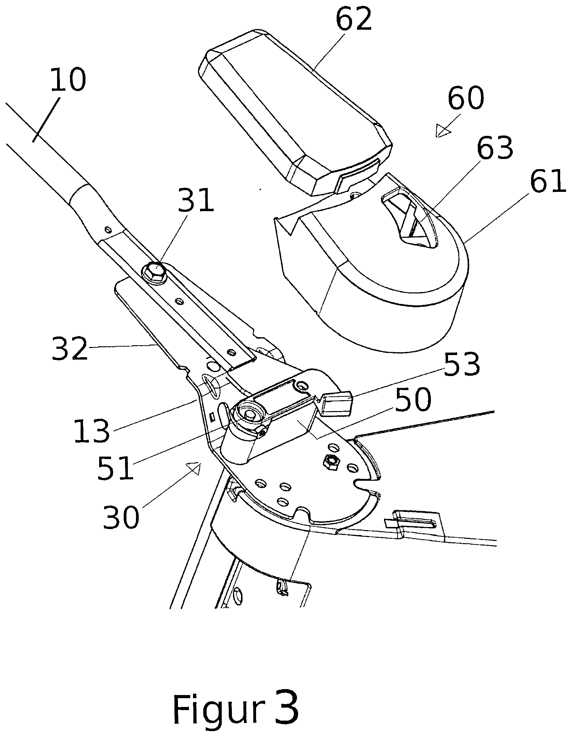

In den Figuren 1 und 2 ist der insgesamt mit 30 bezeichnete Holm Verstellmechanismus durch eine Abdeckung 61, 62 verdeckt dargestellt, wobei die Abdeckung 61 eine Aussparung 63 aufweist, durch die hindurch sich ein Betätigungsvorsprung 53 eines Rasthebels 50 erstreckt, der mit Hilfe des Betätigungsvorsprungs 53 aus einer Raststellung heraus bewegbar ist, um den Holm 10 auf verschiedene Höhen einzustellen oder ein vollständiges Umlegen des Holms 10 über das Gerät 20 umzulegen, wie dies anhand der Figuren 2 bis 4 nachfolgend noch näher erläutert wird,.

Wie dies insbesondere aus den Figuren in den 3 und 4 erkennbar ist, umfasst der Holm-Verstellmechanismus 30 eine an dem Gerät 20 befestigte Holm-Aufnahmeplatte 32, an der das dem Gerät 20 zugewandte freie Ende 12 des Holms 10 beispielsweise durch eine Schraube 31 drehbar gelagert ist, die sich durch entsprechende Bohrungen in der Holm-Aufnahmeplatte 32 und des Endes 12 des Holms 10 erstreckt und eine erste Drehachse bildet.

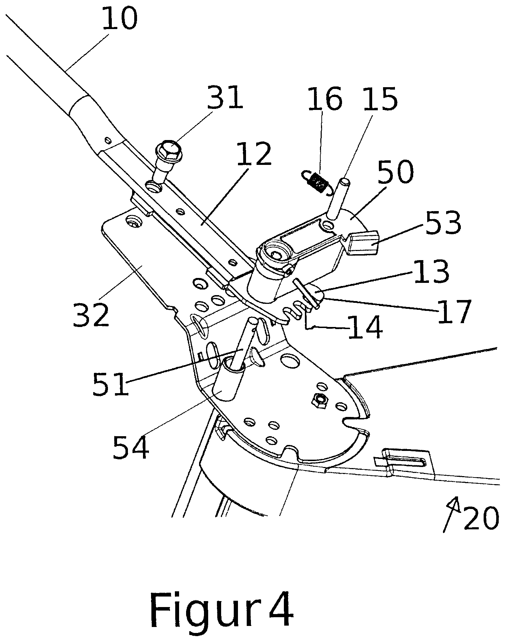

An diesem freien Ende 12 des Holms ist eine in Figur 4 gezeigte Rastplatte 13 beispielsweise durch Schweißen befestigt, die sich im Wesentlichen parallel zur Aufnahmeplatte erstreckt.

Die Rastplatte 13 weist eine sich im Wesentlichen bogenförmig um die erste Drehachse 31 erstreckende Endkante 17 mit einer Anzahl von Rastkerben 14 auf, in die ein Passstift 15 eingreifen kann, der an dem Rasthebel 50 befestigt ist.

Die Rastkerben 14 weisen vorzugsweise eine prismatische Fom auf, die sich ausgehend von der Endkante 17 in Richtung auf die erste Drehachse 13 verengt, Der Rasthebel 50 ist an seinem dem Passstift entgegengesetzten Ende um eine an der Holm-Aufnahmeplatte 32 befestigte Welle 51 drehbar und an seinem der Welle 51 entgegengesetzten Ende mit dem Betätigungsvorsprung 53 versehen, der in der Ausnehmung 63 eines ersten Teils 61 einer Abdeckung der Holm-Aufnahme verschiebbar ist, wie dies insbesondere aus den Figuren 1 und 2 zu erkennen ist.

Der Rasthebel 50 ist durch eine in Figur 4 nur schematisch dargestellte Feder 16 in die Raststellung vorgespannt.

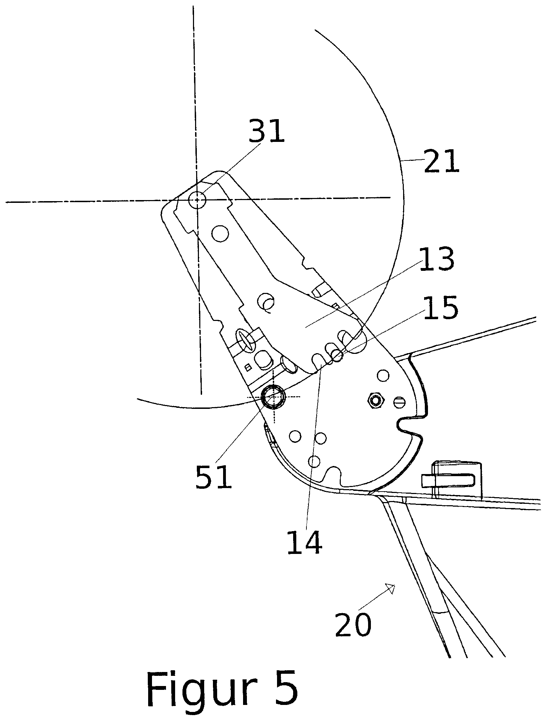

Die Anordnung des Drehpunktes 31 des Holms 10 und des Drehpunktes 51 des Rasthebels 50 ist in der insbesondere aus Figur 5 erkennbaren Weise so gewählt, dass der Rasthebel 50 nur auf Druck oder Zug beansprucht wird. Dies wird dadurch erreicht, dass der Drehpunkt 51 des Rasthebels 50 auf einer Kreisbahn 21 der Drehung des Holms 10 auf der Holm-Aufnahmeplatte 13 und gegenüber der Längsachse des Holms in dessen Betriebsstellungen seitlich versetzt angeordnet ist, wobei der Raststift 15 im eingerasteten Zustand vorzugsweise ebenfalls auf der Kreisbahn 21 der Drehung der Rastplatte 13 um die erste Drehachse 31 liegt. Damit wird keine bzw. nur eine minimale Rotation des Rasthebels 50 bei einer Krafteinwirkung auf den Holm 10 verursacht. Durch dieses Aufbau gelingt es, dass System nahezu spielfrei zu gestalten.

Bei dem U-förmigen Holm, sind die freien Enden der Holmstangen 10 über eine Querstange miteinander verbunden und die Ausführungsform des Holm-Verstellmechanismen auf beiden Seiten spiegelsymmetrisch zur Längsachse des Gerätes 20 angeordnet.

Hierbei sind die die Wellen 51 der Rasthebel 50 über eine sich in Querrichtung erstreckende Stange miteinander verbunden oder als Teil von dieser ausgebildet, und die Rasthebel 50 sind drehfest mit den jeweiligen Enden dieser Stange verbunden, so dass eine Drehung des Hebels 50 an einer Seite um ihren gemeinsamen Drehpunkt in der Mittelachse der Welle 51 auf die gegenüberliegende Seite des Gerätes 20 übertragen wird. Hierbei ist jedem Rasthebel 50 eine eigene Vorspannfeder 16 oder eine andere elastische Einrichtung zugeordnet. Auf diese Weise kann eine geringfügige Verdrehung oder Torsion der die Rasthebel miteinander verbindende Stange oder ein konstruktiv bedingtes Spiel zwischen der Verbindungsstange und den Rasthebeln zugelassen und ausgenutzt werden.

Bei dem Eingriff des Passstiftes 15 in eine der Kerben 14 der Rastplatte 13 wird der Holm 10 in seiner Drehbewegung gesperrt. Dreht man nun auf einer der beiden Seiten den Rasthebel 50 gegen die Wirkung der Feder 16, so wird der Holm wieder freigegeben und kann sich um seine Drehachse bewegen, die durch die Schraube 31 bestimmt ist.

Die Rastplatte 13 weist bei der in Figur 4 dargestellten Ausführungsform drei Rastkerben und damit drei Verrastungsmöglichkeiten auf, mit denen man drei Holmhöhen einstellen kann. Selbstverständlich kann auch eine andere Anzahl von Rastkerben verwendet werden. Weiterhin ist es möglich den Holm komplett umzulegen.

Die die Wellen 51 verbindende Koppelstange kann vorzugsweise durch ein Rohr 54, welches zur Befestigung einer Heckklappe oder dergleichen des Gerätes 20 dient, verlaufen. Somit kann man ohne einen zusätzlichen Kanal eine Kopplung der Rasthebel 50 erreichen.

## Patentansprüche

1. Vorrichtung zur Einstellung der Position eines Holms zum Bewegen und/oder Steuern eines ortsbeweglichen Gerätes (20), bei der der Holm mindestens eine Holmstange (10), deren erstes Ende (12) drehbar an einem Ende des Gerätes (20) befestigt ist, deren zweites Ende einen Handgriff trägt, einen Verstellmechanismus (30) mit einer an dem Gerät (20) angeordneten Holm-Aufnahmeplatte (32) aufweist, an der das erste Ende der Holmstange (10) um die erste Drehachse (31) herum drehbar und auf mehrere Schwenk-stellungen einstellbar an dem Gerät (20) befestigt ist, und Rasteinrichtungen (15, 50) zur Festlegung der Holmstange (10) in zumindest einer Schwenkstellung aufweist,
wobei die Rasteinrichtungen eine das erste Ende der Holmstange (10) auf der dem Handgriff entgegengesetzten Seite der erste Drehachse (31) verlängernde Rastplatte (13), die eine Anzahl von Rastkerben (14) aufweist, und einen Rasthebel (50) einschließen, dessen erstes Ende auf einer zweiten Drehachse (51) auf der Holm-Aufnahmeplatte (7) drehbar befestigt ist, und dessen zweites Ende einen Raststift (15) trägt, der in die Rastkerben (14) einrastbar ist und in die Raststellung durch elastische Einrichtungen (16) vorgespannt ist, dass die erste Drehachse (31) und die zweite Drehachse (51) im Wesentlichen parallel zu einander angeordnet sind, dass die Rastplatte (13) eine sich im Wesentlichen bogenförmig um die erste Drehachse (31) erstreckende Endkante (17) aufweist, dass sich die Rastkerben (14) von der Endkante (17) der Rastplatte (13) aus in Richtung auf die erste Drehachse (31) erstrecken, und dass die Rastkerben (14) eine prismatische Form aufweisen und sich in Richtung auf die erste Drehachse (31) derart verengen, dass der Raststift (15) im eingerasteten Zustand auf der Kreisbahn (21) der Drehung der Rastplatte (13) um die erste Drehachse (31) iegt,
**dadurch gekennzeichnet, dass**
zwei Holmstangen (11) an entgegengesetzten Seiten des Gerätes (20) vorgesehen sind, deren zweites Ende durch eine den Handgriff tragende Verbindungsstange verbunden sind, dass ein jeweiliger Verstellmechanismus (30) an jedem ersten Ende (12) der Holmstangen (11) angeordnet ist, und dass die zweiten Drehachsen (51) der Rasthebel (50) über eine Verbindungsstange miteinander und mit den Rasthebeln (50) drehfest verbunden sind.

2. Vorrichtung nach Anspruch 1,
**dadurch gekennzeichnet, dass**
der Drehpunkt des Rasthebels (50) gegenüber der Längsachse des Holms (10) in dessen Betriebsstellungen seitlich versetzt angeordnet ist.

3. Vorrichtung nach Anspruch 1 oder 2,
**dadurch gekennzeichnet, dass**
sich die Verbindungsstange durch ein an dem Gerät (20) vorgesehenes rohrförmiges Element oder durch den freien Raum von einer Seite des Geräts zu dessen andere Seite erstreckt.

4. Vorrichtung nach einem oder mehreren der vorhergehenden Ansprüche,
**dadurch gekennzeichnet, dass**
die Rasthebel (50) jedes der Verstellmechanismen über jeweilige elastische Einrichtungen (16) in die Raststellung vorgespannt sind.

5. Vorrichtung nach einem oder mehreren der vorhergehenden Ansprüche,
**dadurch gekennzeichnet, dass**
die Elemente des Verstellmechanismus (30) durch eine Abdeckung (61, 62) abgedeckt sind, und dass sich ein Vorsprung (53) des Rasthebels durch eine Aussparung (63) in der Abdeckung (61) aus dieser heraus erstreckt.

## Claims

1. A device for adjusting the position of a spar for moving and/or controlling a moving device (20), in which the spar includes at least one spar rod (10), the first end (12) of which is attached rotatably to an end of the device (20), the second end of which carries a handle, a shifting mechanism (30) with a spar receiving plate (32) arranged on the device (20), on which plate the first end of the spar rod (10) is attached to the device (20) to be rotatable about the first axis of rotation (31) and to be adjustable to a plurality of pivot positions, and has latching devices (15, 50) for fixing the spar rod (10) in at least one pivot position,
wherein the latching devices have a latching plate (13) prolonging the first end of the spar rod (10) on the side of the axis of rotation (31) opposite the handle, which plate has a number of latching notches (14), and a latching lever (50), the first end of which is attached to the spar receiving plate (7) to be rotatable on a second axis of rotation (51), and the second end of which carries a latching pin (15) which can be snapped into the latching notches (14) and is biased into the latching position by elastic means (16), that the first axis of rotation (31) and the second axis of rotation (51) are arranged substantially in parallel to one another, that the latching plate (13) has an end edge (17) extending substantially in an arcuate manner about the first axis of rotation (31), that the latching notches (14) extend from the end edge (17) of the latching plate (13) towards the first axis of rotation (31), and that the latching notches (14) have a prismatic shape and narrow towards the first axis of rotation (31) such that the latching pin (15), in the snapped-in state, lies on the circular path of the rotation of the latching plate (13) about the first axis of rotation (31),
**characterized in that**
two spar rods (11) are provided on opposite sides of the device (20), the second ends of which rods are connected by a connecting rod carrying the handle, that a respective shifting mechanism (30) is arranged at each first end (12) of the spar rods (11), and that the second axes of rotation (51) of the latching levers (51) are connected to one another and to the latching levers (50) in a torque-proof manner via a connecting rod.

2. The device according to claim 1,
**characterized in that**
the pivot point of the latching lever (50) is arranged to be laterally offset relative to the longitudinal axis of the spar (10) in the operational positions thereof.

3. The device according to claim 1 or 2,
**characterized in that**
the connecting rod extends through a tubular element provided on the device (20) or through a free space from one side of the device to the other side thereof.

4. The device according to one or more of the preceding claims,
**characterized in that**
the latching lever (50) of each of the shifting mechanisms is biased into the latching position via respective elastic means (16).

5. The device according to one or more of the preceding claims,
**characterized in that**
the elements of the shifting mechanism (30) are covered by a cover (61, 62), and that a projection (53) of the latching lever extends out from it through an opening (63) in the cover (61).

## Revendications

1. Dispositif pour régler la position d'un longeron destiné à déplacer et/ou à contrôler un appareil mobile (20), dans lequel le longeron comprend au moins une tige de longeron (10) dont une première extrémité (12) est fixée de manière rotative à une extrémité de l'appareil (20) et dont une deuxième extrémité porte une poignée, ainsi qu'un mécanisme de réglage (30) ayant une plaque de réception de longeron (32) disposée sur l'appareil (20), sur laquelle la première extrémité de la tige de longeron (10) est fixée à l'appareil (20) de manière à pouvoir tourner autour du premier axe de rotation (31) et à pouvoir être réglée dans plusieurs positions de pivotement, et des moyens d'enclenchement (15, 50) pour immobiliser la tige de longeron (10) dans au moins une position de pivotement,
dans lequel
les moyens d'enclenchement comprennent une plaque d'enclenchement (13) qui prolonge la première extrémité de la tige de longeron (10) du côté du premier axe de pivotement (31) opposé à la poignée et qui comporte un certain nombre d'encoches d'enclenchement (14), et un levier d'enclenchement (50) dont la première extrémité est montée de manière rotative sur un deuxième axe de rotation (51) sur la plaque de réception de longeron (7) et dont la deuxième extrémité porte une broche d'enclenchement (15) qui peut être enclenchée dans les encoches d'enclenchement (14) et qui est précontrainte vers la position d'enclenchement par des moyens élastiques (16), et
le premier axe de rotation (31) et le deuxième axe de rotation (51) sont disposés sensiblement parallèlement l'un à l'autre,
la plaque d'enclenchement (13) présente un bord d'extrémité (17) qui s'étend sensiblement en forme d'arc autour du premier axe de rotation (31), les encoches d'enclenchement (14) s'étendent depuis le bord d'extrémité (17) de la plaque d'enclenchement (13) dans la direction du premier axe de rotation (31), et
les encoches d'enclenchement (14) présentent une forme prismatique et se rétrécissent dans la direction du premier axe de rotation (31) de telle sorte que, à l'état enclenché, la broche d'enclenchement (15) se trouve sur la trajectoire circulaire (21) de la rotation de la plaque d'enclenchement (13) autour du premier axe de rotation (31),
**caractérisé en ce que**
deux tiges de longeron (11) sont prévues sur des côtés opposés de l'appareil (20), dont les deuxièmes extrémités sont reliées par une bielle portant la poignée,
**en ce qu'**un mécanisme de réglage respectif (30) est disposé à chaque première extrémité (12) des tiges de longeron (11), et
**en ce que** les deuxièmes axes de rotation (51) des leviers d'enclenchement (50) sont reliés entre eux et aux leviers d'enclenchement (50) solidairement en rotation par une bielle.

2. Dispositif selon la revendication 1,
**caractérisé en ce que**
le point de rotation du levier d'enclenchement (50) est disposé latéralement en décalage par rapport à l'axe longitudinal du longeron (10) dans ses positions de fonctionnement.

3. Dispositif selon la revendication 1 ou 2,
**caractérisé en ce que**
la bielle s'étend à travers un élément tubulaire prévu sur l'appareil (20) ou à travers l'espace libre, depuis un côté de l'appareil jusqu'à l'autre côté de celui-ci.

4. Dispositif selon l'une ou plusieurs des revendications précédentes,
**caractérisé en ce que**
les leviers d'enclenchement (50) de chacun des mécanismes de réglage sont précontraints vers la position d'enclenchement par des moyens élastiques respectifs (16).

5. Dispositif selon l'une ou plusieurs des revendications précédentes,
**caractérisé en ce que**
les éléments du mécanisme de réglage (31) sont recouverts par un recouvrement (61, 62), et
**en ce qu'**une saillie (53) du levier d'enclenchement s'étend hors du recouvrement (61) à travers une échancrure (63) de celui-ci.
